# EUROPEAN PATENT APPLICATION

(11) **EP 4 368 857 A1**
(43) Date of publication of application: **15.05.2024**
(21) Application number: 22383095.1
(22) Date of filing: 14.11.2022
(51) Int. Cl.: F16H 57/08

(54) **CONNECTOR ASSEMBLY**

(71) Applicant: Siemens Gamesa Renewable Energy Innovation & Technology S.L., 31621 Sarriguren (Navarra) (ES)
(72) Inventor: SAENZ DE UGARTE SEVILLA, Patrik, 48940 Leioa (Bizkaia) (ES)
(74) Representative: SGRE-Association

(57) **Abstract**

The invention describes a connector assembly (1) for a drivetrain (2, 3, 4) comprising at least a low-speed shaft (20) and a planetary gearset (3) comprising an annular arrangement of peripheral gears (31P), the connector assembly comprising a portion (11) of each first-stage peripheral gear shaft (310) arranged to protrude from the drive end of the planetary gearset (3); an annular arrangement of axial bores (10) formed about the low-speed shaft (20), wherein each axial bore (10) is arranged to receive the protruding portion (11) of a peripheral gear shaft (310); and wherein each axial bore (10) and the corresponding protruding portion (11) of a peripheral gear shaft (31P) are dimensioned to establish an interference fit. The invention further describes a wind turbine drivetrain (2, 3, 4), and a method of connecting a low-speed shaft (20) of a drivetrain (2, 3, 4) to a planetary gearset (3).

## Description

### Background

In a widespread type of horizontal-axis wind turbine, the aerodynamic rotor - usually comprising three rotor blades mounted to a hub - turns a low-speed rotor shaft or "main shaft" which is connected by a gearbox to a high-speed generator shaft. Ideally, the gearbox will convert the low-speed rotation of the main shaft into high-speed rotation of the gearbox shaft without any loss of torque.

During operation of a wind turbine, the aerodynamic rotor transfers loads to the main shaft. These loads include torque that is to be transferred to the generator to create electrical power, as well as extraneous loads that must be transferred via bedplate, nacelle and tower to the foundation. Extraneous loads can arise for example from vibration of the rotor blades, wind shear forces etc. and manifest as vibration or displacement of the main shaft. Care is generally taken to ensure that support structures (housings, bearings etc.) of the drivetrain components reliably transfer all extraneous loads towards the foundation.

The purpose of the gearbox is to reduce torque and to increase rotational velocity. The type of gearbox discussed herein shall be understood to be an epicyclic gear train. Such a gearbox usually has several stages. The main components of an epicyclic gear train are a central or "sun" gear carried on a longitudinal central shaft (in line with the low-speed shaft and high-speed shaft of the drivetrain) and a number of peripheral or "planet" gears, each carried on a longitudinal shaft. The gear shafts of each stage are parallel, and the peripheral gear shafts are mounted to a rotating part or "planet carrier". An epicyclic gear train can have several such stages. In the following, the terms "epicyclic gear train", "planetary gearset" and "planetary gear train" may be regarded as synonyms and may be used interchangeably.

In a drivetrain with a multi-stage planetary gearset, the low-speed shaft turns the first-stage planet carrier, which in turn causes the peripheral gears to turn the first-stage central gear. Each central gear is connected to a planet carrier of the next stage, except for the last central gear, which drives the high-speed generator shaft.

The first-stage planet carrier can be in the form of a rigid plate that holds the first-stage peripheral gear shafts in the desired annular formation. The first-stage planet carrier generally also acts as a cover to close off the front end of the gearbox. Conventionally, the first-stage planet carrier is connected in some way to the low-speed shaft of the drivetrain. The connection between the low-speed shaft and the gearbox should ideally transfer all torque to the gearbox. The usual approach is to connect the low-speed shaft to the first-stage planet carrier using a dedicated coupling means arranged between the low-speed shaft and the gearbox. Such a coupling means can comprise an arrangement of splined teeth, cylindrical pins, multiple bolts, a shrink disc, etc.

The prior art types of connector assembly are indirect solutions, i.e. torque is transferred from the main shaft via the connector assembly to the planet carrier of the first stage. The planet carrier then transfers torque to the first stage peripheral gears. A disadvantage of a prior art connector assembly is that additional intermediate parts are required, adding to the overall cost. Because such parts can be subject to wear or fatigue, the additional maintenance effort increases the overall cost of energy. Furthermore, even if all components are machined to very high precision, each transfer - from main shaft via the connector assembly to the first-stage planet carrier, and then from the planet carrier to the first-stage peripheral gears - can be associated with some loss of torque.

It is therefore an object of the invention to provide an improved way of connecting a main shaft assembly to a planetary gearset.

This object is achieved by the claimed connector assembly and by the claimed method of connecting a low-speed shaft of a drivetrain to a planetary gearset.

### Description

The inventive connector assembly is intended for use in a drivetrain comprising at least a low-speed shaft and a planetary gearset. The planetary gearset can have multiple stages, each comprising an annular arrangement of peripheral gears. In the following, even if the planetary gearset has only one stage, this is referred to as the "first stage" The low-speed shaft drives the first stage of the planetary gearset. Each stage of the planetary gearset drives the next. In the following, it shall be understood that each peripheral gear comprises an axially extending shaft and a toothed outer surface that engages with a ring gear and a central gear.

According to the invention, the connector assembly comprises a portion of each first-stage peripheral gear shaft, arranged to protrude "backwards" (i.e. in the direction of the low-speed shaft) from the drive end of the planetary gearset. This part of the inventive connector assembly can be visualized as an annular arrangement of cylindrical protrusions extending from the front of the gearbox. The connector assembly further comprises an annular arrangement of axial bores formed about the low-speed shaft, wherein each axial bore is arranged to receive the exposed portion of a peripheral gear shaft, and an interference fit between each exposed portion and the corresponding axial bore. In the inventive connector assembly, each axial bore and the corresponding protruding portion are dimensioned to establish an interference fit.

The inventive connector assembly is particularly suited for implementation in a large drivetrain in which high torque must be transferred from a low-speed shaft to a planetary gearset. A large drivetrain may be deployed in a power generation facility such as a wind turbine.

An advantage of the inventive connector assembly is that torque from the low-speed shaft is essentially directly transferred to the first stage of the planetary gearset. The invention is based on the insight that the low-speed shaft can fulfil the function of planet carrier, i.e. the low-speed shaft can hold the first-stage peripheral gear shafts in the desired annular formation. This is facilitated by manufacturing the gearbox so that the first-stage planet shafts extend outwards or "backwards" from the front of the gearbox, exposing these "extra lengths" for use in the inventive connector assembly. It follows that, in a drivetrain using the inventive connector assembly, the planetary gearset does not need a carrier frame for the first stage planet gears shafts.

Since the exposed or protruding portion of a peripheral gear shaft is inserted into an axial bore, such an exposed portion of a peripheral gear shaft may be referred to more simply as a "planetary shaft insert", "shaft insert", or "axial inset" in the following.

According to the invention, the method of connecting a low-speed shaft of a drivetrain to a planetary gearset of the drivetrain comprises the steps of providing the peripheral gear shafts in an annular arrangement in which first-stage each peripheral gear shaft has an exposed portion protruding from the carrier; forming an annular arrangement of axial bores about the low-speed shaft, wherein each axial bore is arranged to receive a planetary shaft insert; inserting each planetary shaft insert into a corresponding axial bore; and establishing an interference fit between each axial insert and the corresponding axial bore.

The invention further describes a wind turbine drivetrain comprising a low-speed assembly with a low-speed or input shaft, a planetary gearset, and a generator assembly with a higher-speed output or "torque shaft". The wind turbine drivetrain also comprises an embodiment of the inventive mounting arrangement between the input shaft and the planetary gearset. The terms "main shaft", "low-speed shaft" and "input shaft" may be used interchangeably herein. Similarly, the terms "torque shaft", "generator shaft" and "output shaft" may be used interchangeably.

Particularly advantageous embodiments and features of the invention are given by the dependent claims, as revealed in the following description. Features of different claim categories may be combined as appropriate to give further embodiments not described herein.

As used in the context of the invention, the term "axial" shall be understood to mean "parallel to the main axis of the drivetrain", i.e. parallel to the axis of rotation common to the input shaft, the sun gears and the output shaft.

In the following, it may be assumed that the wind turbine is a horizontal-axis wind turbine. Without restricting the invention in any way, it may be assumed that the aerodynamic rotor of the wind turbine has a diameter in the order of 180 m - 240 m or even more. The wind turbine aerodynamic rotor is connected to the front end or "drive end" of the low-speed shaft. The planetary gearset is dimensioned accordingly and may comprise several stages. For example, the gearbox may be realized as a single-stage planetary gearset with three planet gears. In a further example, the gearbox may be realized as a three-stage planetary gearset with seven planet gears in the first stage, five planet gears in the second stage, and three planet gears in the third stage.

The axial bores can be formed in dedicated annular structure mounted as a flange about the rear end of the low-speed shaft. For optimal torque transfer, the connection must be very secure so that these parts act as a single physical entity. However, manufacture of such an assembly can be associated with significant expense. Therefore, in a particularly preferred embodiment of the invention, the annular arrangement of axial bores is formed in a rear flange already formed as part of the low-speed shaft. This approach may be preferable when the design of the low-speed shaft already includes a rear-end flange for the purpose of holding the rear bearing and/or for providing a seal for bearing lubricant. Equally, the input shaft of the low-speed assembly may already have a rear-end flange for connecting to an intermediate structure or prior art connector assembly: in this case, in lieu of such an intermediate structure, the flange is re-purposed as described herein to support the planet shafts in their annular configuration.

In a large wind turbine as described above, at the interface between input shaft and gearbox, the diameter of the input shaft flange may be in the order of 1.5 m - 2 m, and the diameter of the exposed portion of a first-stage planet shaft can be in the order of 200 mm - 300 mm, however it shall be noted that these exemplary dimensions serve to describe the type of drivetrain in which the invention may be deployed to advantage.

In an assembly stage, the annular formation of exposed peripheral gear shaft portions is inserted into the corresponding annular arrangement of axial bores by pushing the gearbox in the direction of the low-speed shaft (or vice versa). In an interference fit (also referred to as a "friction fit" or "pressed fit"), the mating parts fit tightly together to obtain a joint that is maintained by friction once the parts have been pushed together.

In a preferred embodiment of the invention, the diameter of an axial bore essentially corresponds to the diameter of the corresponding planetary shaft insert, i.e. the diameter of an axial bore is understood to be at most only marginally larger than the diameter of the shaft insert. The diameter of an axial bore may even be slightly smaller than the diameter of the corresponding planetary shaft insert.

In any such an embodiment, it may be difficult to push all planetary shaft inserts simultaneously into the axial bores. Therefore, in a further preferred embodiment of the invention, the outer end of each exposed portion is provided with an annular chamfer, which can ease passage of the shaft inserts into the axial bores. Any suitable technique such as plastic deformation, thermal assembly (cooling or heating the parts), etc. may be deployed to facilitate assembly of the input shaft and the planetary gearset. Passage of the inserts into the axial bores may be further facilitated by a dry lubricant such as molybdenum disulphide, graphite etc., or by a film of grease or oil.

In a particularly preferred embodiment of the invention, the diameter of an axial bore exceeds the diameter of its planetary shaft insert. The difference in diameter can be up to 100 mm, or may be less, for example 40 mm. Since the axial insert and axial bore are assumed to share a longitudinal axis, there is a space between the axial bore and the axial insert. The interference fit can be achieved in a number of ways. In a preferred embodiment of the invention, the connector assembly comprises a cylindrical sleeve between such an axial bore and its insert. Preferably, the wall thickness of the sleeve is chosen so that the sleeve fills the space between axial bore and axial insert. In the examples given above, a sleeve wall thickness of 50 mm is appropriate when the difference in diameter is 100 mm; a sleeve wall thickness of 20 mm is appropriate when the difference in diameter is 40 mm. In an assembly procedure, the annular formation of exposed peripheral gear shaft portions is inserted into the corresponding annular arrangement of axial bores by pushing the gearbox in the direction of the low-speed shaft (or vice versa). Subsequently, a cylindrical sleeve is inserted into the space between each axial bore and insert. To facilitate this step, a cylindrical sleeve can comprise an axial slit extending from one end to the other. Here also, assembly can be facilitated by a suitable lubricant between sleeve and axial bore and/or between insert and sleeve.

In the embodiments described above, a cylindrical shape is assumed for the axial inserts. Each exposed portion of a peripheral gear shaft can simply be an extension of the gear shaft, i.e. the gear shaft has the same diameter along its length. Preferably, the exposed portion of a first-stage planet gear shaft can have a smaller diameter, for example a diameter in the order of 200 mm - 300 mm, so that the axial bore diameter need not be excessively large.

During operation of a wind turbine, extraneous forms of loading such as vibration can be transferred from the aerodynamic rotor to the input shaft. To prevent such vibrations from loosening the interference fit and incurring axial displacement of the gearbox, the invention preferably comprises an axial fixation means to prevent axial displacement of the planetary gearset relative to the input shaft. In one possible embodiment, an annular arrangement of fasteners can be used, with each fastener extending in an axial direction through the input shaft flange and the first-stage carrier frame. One or more fasteners can be arranged in the space between any two neighbouring shaft inserts. Such fasteners can provide extra "stiffness" to the connection between input shaft and planetary gearset.

In a further preferred embodiment of the invention, the planetary shaft inserts are long enough to extend some distance beyond the axial bores, and the axial fixation means makes use of the outer ends of the axial inserts appearing on the upwind or hub-facing side of the rear flange of the low-speed shaft. For example, a through-hole can be formed along a diameter of the outer end of a shaft insert, immediately beside the low-speed shaft flange, and a tight-fitting pin or rod can be pushed into this through-hole. An axial fixation means as described above can be deployed to supplement the connection between input shaft and planetary gearset.

In a particularly preferred embodiment, the outer ends of the axial inserts are provided with a thread to match the thread of a suitable nut, for example a DIN 981 slotted nut such as a KM40 nut, a KMT40 nut, etc. After pushing gearbox and input shaft together and completing the interference fit, a nut is threaded onto the outer end of each axial insert. To facilitate this step, an access opening can be provided in a housing of the main shaft assembly. The input shaft can be turned to bring the outer end of an axial insert into a favourable position. A technician then places a nut onto the outer end and applies sufficient torque to tighten it. The input shaft is then rotated by a sufficient amount to bring the outer end of the next axial insert into position, etc. During this assembly stage, additional fasteners as described above can be used to hold input shaft and gearbox together while the locknuts are threaded onto the axial inserts.

In place of the conventional first-stage planet carrier - which must hold the planetary gear shafts in the required annular formation as described above - the gearbox can be equipped with a simple first-stage cover with round openings shaped to fit about the protruding extensions of the planetary gear shafts. The purpose of such a cover in this case is to seal the gearbox against dirt and moisture, for example during testing and/or transport stages. In a further preferred embodiment of the invention, the input shaft can be closed by a plate that also serves to cover the front end of the gearbox first stage.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a simplified schematic of a wind turbine drivetrain;
Figure 2 illustrates an embodiment of the inventive connector assembly;
Figure 3 shows a simplified exploded view of an embodiment of the inventive connector assembly;
Figure 4 - 6 show various possible interference fit connections in embodiments of the inventive connector assembly;
Figure 7 shows a prior art drivetrain.

In the diagrams, like numbers refer to like objects throughout. Objects in the diagrams are not necessarily drawn to scale.

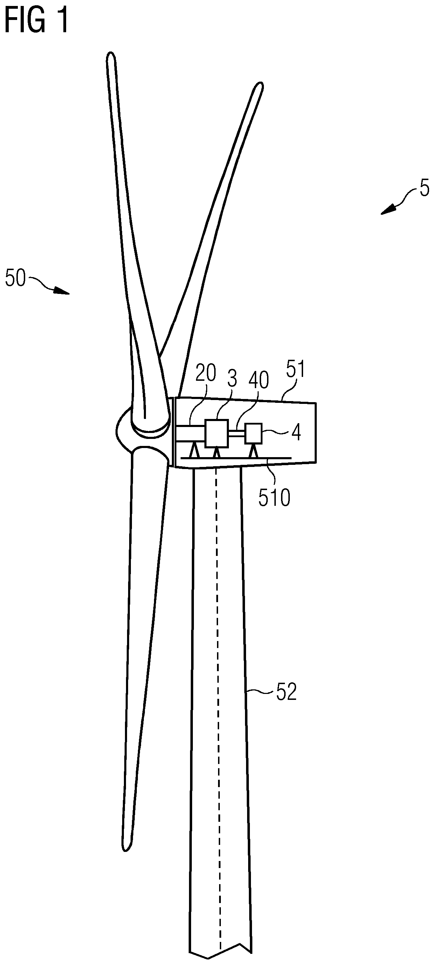

Figure 1 is a simplified schematic of a wind turbine 5 showing the major components of its drivetrain: an aerodynamic rotor 50 is arranged to turn a low-speed shaft 20 or main shaft 20; the main shaft 20 is connected to a multi-stage gearbox 3, the last stage of the gearbox 3 connects to the high-speed shaft 40 of a generator 4. The purpose of the gearbox 4 is to transfer torque from the main shaft 20 to the generator shaft 40, while converting the low velocity of the main shaft 20 into a higher velocity of the generator shaft 40. An aim of drivetrain design is to minimize torque losses. Extraneous loads are transferred from the drivetrain components through various supporting structures (indicated only very basically) to a bedplate 510 of the nacelle 51 and from there into the tower 52 and onwards into a foundation.

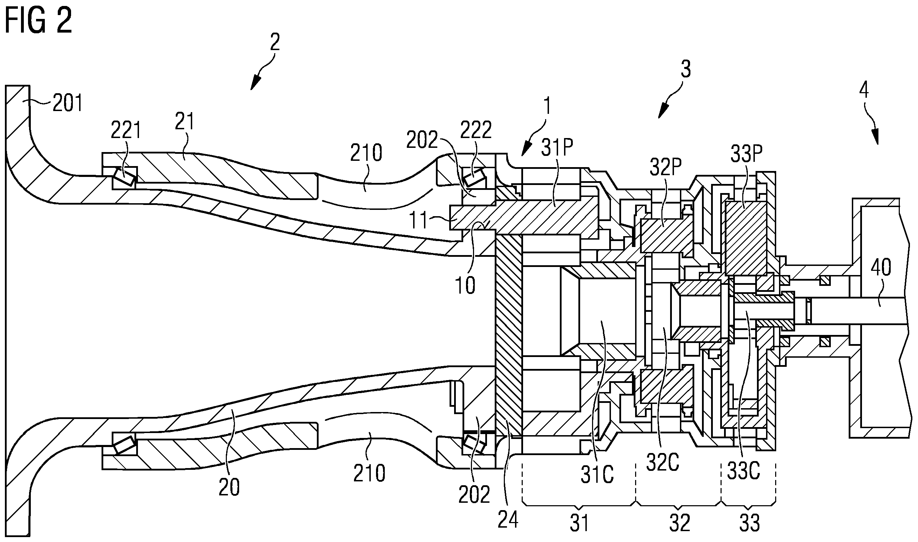

Figure 2 is a cross-section through an exemplary embodiment drivetrain, showing the low-speed assembly 2 and the gearbox 3. The low-speed assembly 2 comprises the main shaft 20 that is turned by the aerodynamic rotor of the wind turbine. The main shaft 20 is supported by a robust housing 21 and a bearing 221, 222 at each end of the housing 21.

At the hub-end of the main shaft 20, a front flange 201 is formed to connect the shaft 20 to the hub of the aerodynamic rotor. At the other end, a rear flange 202 is formed for connection to the gearbox 3.

Here, the gearbox 3 is a three-stage planetary gear train. In this exemplary embodiment, the first gearbox stage 31 deploys seven planetary gears 31P about its sun gear 31C; the second gearbox stage 32 deploys six planetary gears 32P about its sun gear 32C; and the third gearbox stage 33 deploys three planetary gears 33P about its sun gear 33C. In a configuration which will be familiar to the skilled person, each stage includes a ring gear, so that teeth of the planet gears mesh with teeth of the ring gear and also with teeth of the sun gear. Of course, various configurations of such a planetary gearset are possible. The number of planetary gears in the first stage 31 may for example be determined by the diameter of the main shaft 20, which in turn is determined by the size of the aerodynamic rotor.

Each first-stage planetary gear 31P comprises a shaft 310 which is formed to comprise a portion 11 that protrudes "backwards" from the front or drive-end of the gearbox 3. In the inventive connector assembly 1, these protruding portions 11 or axial inserts 11 extend through axial bores 10 formed in the rear flange 202 of the main shaft 20. The diagram clearly shows the axial insert 11 of a first stage planetary gear shaft extending through a axial bore 10. The diameter 10D of the axial bore 10 is essentially the same as the diameter 11D of the axial insert 11 of the first-stage planet shaft 310, to achieve an interference fit 1 between shaft insert 11 and axial bore 10. With this connection, torque is transferred directly from the main shaft 20 to the first stage 31 of the planetary gear train 3. By directly mounting the first-stage planet shafts 310 to the rear flange 202 of the main shaft 20, the invention maximises the amount of torque transferred from the main shaft 20 to the gearbox 3, optimizing torque transfer in this part of the drivetrain.

Effectively, the flange 202 of the input shaft 20 acts as a carrier frame for the first-stage planetary gears 31P.

In this exemplary embodiment, a cover plate 24 closes off the end of the input shaft 20, and also acts as a cover plate for the first stage 31 of the planetary gearset 3. The diagram also indicates access openings 210 in the housing 21 of the low-speed assembly, provided to give access to the axial inserts 11 during assembly and disassembly stages.

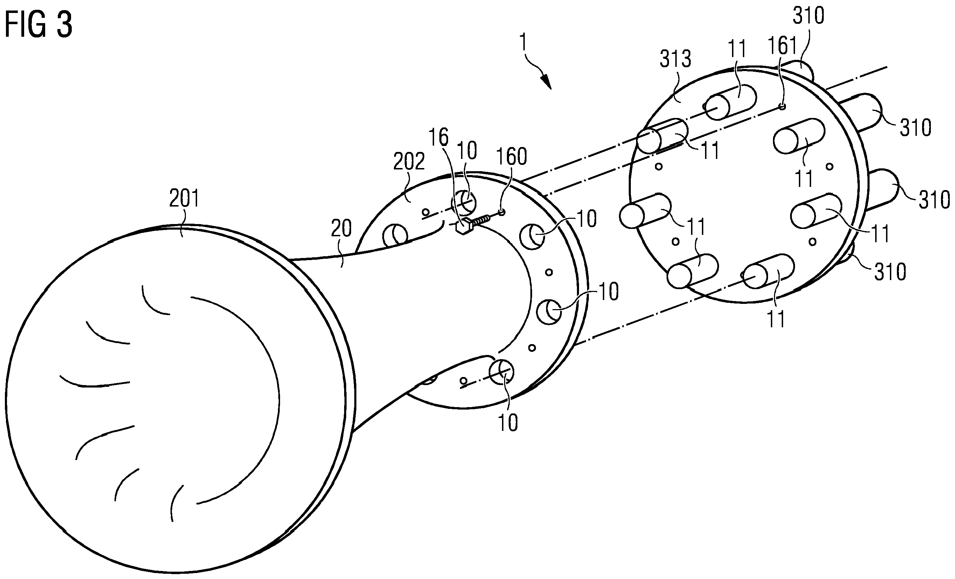

Figure 3 shows a simplified exploded view of the inventive drivetrain assembly of Figure 2. The diagram indicates the main shaft 20 and the front end of the gearbox 3 in a stage of assembly or disassembly. Here, the first stage of the gearbox has seven planetary gears, and each planetary gear shaft 310 is manufactured to have a portion 11 that extends through a round opening in a cover plate 313 as shown here. The cover plate 313 can be deployed in lieu of or in addition to the cover plate 24 described in Figure 2 above. Of course, the cover plate 313 may be realised in essentially the same way as the carrier frame of a conventional planetary gearset, without having to fulfil the function of a carrier frame. For clarity, further details of the gearbox are not shown.

The diagram shows an annular arrangement of equidistantly spaced axial bores 10 formed in the rear flange 202 of the low-speed shaft 20. Each axial bore 10 is placed to receive the axial insert 11 of a first-stage planet shaft 310, i.e. seven axial bores 10 are equidistantly placed to receive the seven axial inserts 11 protruding from the gearbox 3.

To assemble the inventive mounting arrangement 1, the seven axial inserts 11 are inserted into the axial bores 10 of the rear flange 202. An interference fit between the axial bores 10 and the axial inserts 11 can be established in various ways. Assembly of the drivetrain can be facilitated by an annular arrangement of additional fasteners 16 (only one is shown here for the sake of clarity) inserted through matching holes 160, 161 in the input shaft flange 20 and cover plate 313 respectively.

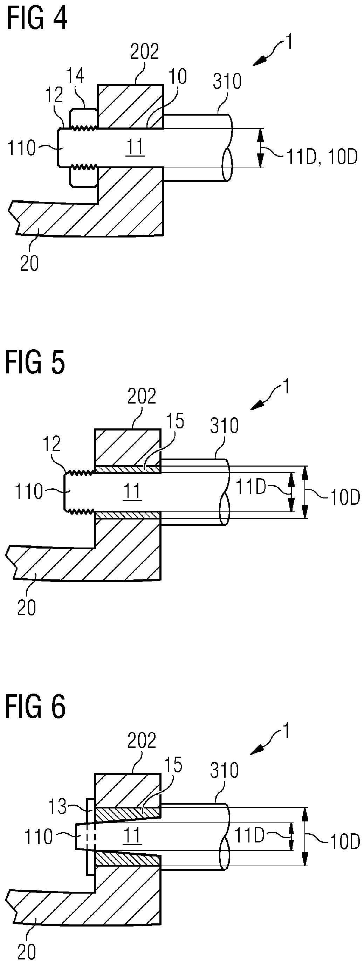

Figure 4 shows one exemplary embodiment, in which an interference fit is formed between the cylindrical surfaces of an axial insert 11 and an axial bore 10, i.e. the diameter 10D of the axial bore 10 and the diameter 11D of the axial insert 11 are essentially identical (the diameter 11D of the axial insert 11 may even slightly exceed the diameter 10D of the axial bore 10). Here, each axial insert 11 has a threaded outer end 110 and a chamfer 12. The chamfers 12 facilitate passage of the axial inserts 11 through the axial bores 10. Since the axial insert diameter 11D is essentially the same as the axial bore diameter 10D, passage of the axial insert 11 through the axial bore 10 can be eased by a suitable lubricant as explained above. Once the axial inserts 11 have been pushed through to the far side of the flange 202, a nut 14 is threaded onto the outer end 110 of each axial insert 11 and sufficient torque is applied to tighten the nuts 14, completing the assembly. The purpose of the nuts 14 is to prevent displacement in the axial direction during operation of the drivetrain. The interference fit 1 between flange 202 and the axial inserts 11 of the first-stage planet shafts 310 serves to transfer essentially all torque from the main shaft 20 to the first stage 31 of the gearbox 3.

Figure 5 shows a further exemplary embodiment, in which an interference fit 1 is formed by a sleeve 15 placed between an axial insert 11 and the respective axial bore 10. Here, the diameter 10D of a axial bore 10 is larger than the diameter 11D of an axial insert 11, and this difference in diameter is made up by the wall thickness of the cylindrical sleeve 15. Here, a sleeve 15 can have a longitudinal slit to facilitate insertion between axial insert 11 and axial bore 10. In this embodiment, the sleeve 15 can be chamfered at both axial inserts, to further facilitate the assembly procedure.

In this case also, the outer end 110 of each axial insert 11 is threaded. As explained in Figure 4 above, once the outer ends 110 of the axial inserts 11 have been pushed through to the far side of the flange 202, a nut 14 is threaded onto each outer end 110 and sufficient torque is applied to tighten the nuts 14, completing the assembly.

Figure 6 shows a further exemplary embodiment, in which the axial inserts 11 are tapered. Here, the diameter 10D of an axial bore 10 can be considerably larger than the smallest diameter 11D of a tapered axial insert 11. It is relatively straightforward to push the gearbox and low-speed shaft together. In this embodiment, an interference fit 1 is formed by a tapered sleeve 15 placed between each tapered axial insert 11 and the respective axial bore 10. Here, the space between the axial bore 10 and the axial insert 11 is made up by the tapered sleeve 15. In this embodiment, an axial stop is established by a pin 13 or rod 13 extending diametrically through the outer end 110 of an axial insert 11.

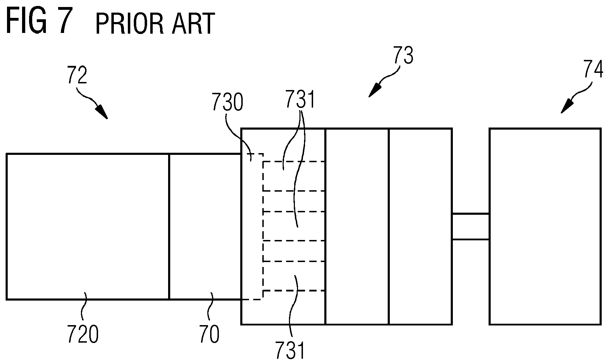

Figure 7 shows part of a prior art wind turbine drivetrain including a planetary gearset 73 between a low-speed assembly 72 and a high-speed assembly 74. In the conventional manner, the front end of the planetary gearset 73 includes a rotating carrier frame 730 to support the annular arrangement of peripheral gear shafts 731. Here, the low-speed shaft 720 and the front-end planet carrier 730 are joined by an intermediate component 70. However, as explained in the introduction, the intermediate component 70 between the low-speed shaft 720 and planetary gearset 73 leads to some loss of torque. Furthermore, necessary maintenance and repair routines for the intermediate component 70 add to the overall cost of energy.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A connector assembly (1) for a drivetrain (2, 3, 4) comprising at least a low-speed shaft (20) and a planetary gearset (3) comprising an annular arrangement of peripheral gears (31P), the connector assembly comprising
- a portion (11) of each first-stage peripheral gear shaft (310) arranged to protrude from the drive end of the planetary gearset (3);
- an annular arrangement of axial bores (10) formed about the low-speed shaft (20), wherein each axial bore (10) is arranged to receive the protruding portion (11) of a peripheral gear shaft (310); and wherein
- each axial bore (10) and the corresponding protruding portion (11) of a peripheral gear shaft (31P) are dimensioned to establish an interference fit.

2. A connector assembly according to the preceding claim, wherein the annular arrangement of axial bores (10) is formed in a flange (202) of the low-speed shaft (20).

3. A connector assembly according to any of the preceding claims, wherein the diameter (10D) of an axial bore (10) exceeds the diameter (11D) of the protruding portion (11) of a peripheral gear shaft (31P) by at most 60 mm, more preferably by at most 40 mm.

4. A connector assembly according to any of the preceding claims, comprising a cylindrical sleeve (15) between an axial bore (10) and the corresponding protruding portion (11) of a peripheral gear shaft (31P).

5. A connector assembly according to any of the preceding claims, wherein the cylindrical sleeve (15) comprises an axial slit extending along the length of the sleeve (15).

6. A connector assembly according to any of the preceding claims, wherein the diameter (10D) of an axial bore (10) essentially corresponds to the diameter (11D) of the protruding portion (11) of a peripheral gear shaft (31P).

7. A connector assembly according to any of the preceding claims, comprising an annular chamfer (12) about the protruding portion (11) of a peripheral gear shaft (31P).

8. A connector assembly according to any of the preceding claims, comprising an axial fixation means (13, 14) adapted to prevent axial displacement of the planetary gearset (3) relative to the low-speed shaft (20).

9. A connector assembly according to any of the preceding claims, wherein the axial fixation means comprises a threaded connection between each protruding portion (11) and a complementary nut (14).

10. A connector assembly according to any of the preceding claims, comprising a number of fasteners (16) between the low-speed shaft (20) and a housing (313) of the planetary gearset (3), wherein a fastener (16) is arranged in a space between two neighbouring peripheral gear shafts (31P).

11. A wind turbine drivetrain (2, 3, 4) comprising
- a low-speed assembly (2);
- a planetary gearset (3) driven by a low-speed shaft (20) of the low-speed assembly (2); and
- a generator assembly (4) driven by an output shaft (33C) of the planetary gearset (3); **characterized by**
- a connector assembly (1) according to any of claims 1 to 10 connecting the low-speed shaft (20) and the planetary gearset (3) by an interference fit.

12. A wind turbine drivetrain according to the preceding claim, wherein the planetary gearset (3) comprises a plurality of stages (31, 32, 33).

13. A wind turbine drivetrain according to claim 11 or claim 12, wherein the first stage (31) of the planetary gearset (3) comprises at least three peripheral gears (31P), more preferably at least five peripheral gears (31P), each with a protruding portion (11) extending in the direction of the low-speed assembly (2).

14. A method of connecting a low-speed shaft (20) of a drivetrain (2, 3, 4) to a planetary gearset (3), the planetary gearset (3) comprising an annular arrangement of first-stage peripheral gears (31P), which method comprises the steps of
- providing a portion (11) of each peripheral gear shaft (310) to protrude from the drive end of the planetary gearset (3);
- forming an annular arrangement of axial bores (10) about the low-speed shaft (20), wherein each axial bore (10) is arranged to receive the protruding portion (11) of a peripheral gear shaft (310);
- inserting each protruding portion (11) into a corresponding axial bore (10); and
- forming an interference fit between each protruding portion (11) and the corresponding axial bore (10).

15. A method according to the preceding claim, comprising a step of augmenting the connection by a means (13, 14) of preventing axial displacement of the planetary gearset (3) relative to the low-speed shaft (20).
